# EUROPEAN PATENT SPECIFICATION

(11) **EP 1 698 111 B1**
(45) Date of publication and mention of the grant of the patent: **16.07.2008**
(21) Application number: 04801580.4
(22) Date of filing: 17.12.2004
(51) Int. Cl.: H04L 12/413, H04L 12/28

(54) **METHODS AND APPARATUSES FOR TRANSMIT LATENCY REDUCTION IN WIRELESS COMMUNICATION SYSTEMS**
VERFAHREN UND VORRICHTUNGEN ZUR VERRINGERUNG DER SENDELATENZ IN DRAHTLOSEN KOMMUNIKATIONSSYSTEMEN
PROCEDES ET APPAREILS PERMETTANT DE REDUIRE LE TEMPS D'ATTENTE DE TRANSMISSION DANS DES SYSTEMES DE COMMUNICATION SANS FIL

(30) Priority: 20.12.2003 US 531408 P
(43) Date of publication of application: 06.09.2006
(73) Proprietor: Koninklijke Philips Electronics N.V., 5621 BA Eindhoven (NL)
(72) Inventor: FREDERIKS, Guido, NL-5621 BA Eindhoven (NL); GARG, Atul, NL-5621 BA Eindhoven (NL)
(74) Representative: van der Veer, Johannis Leendert
(86) International application number: PCT/IB2004/052838
(87) International publication number: WO 2005/062541

(56) References cited:
- EP-A1- 0 125 095
- EP-A2- 0 314 217
- KUO W-K ET AL: "Enhanced backoff scheme in CSMA/CA for IEEE 802.11" PROCEEDINGS OF THE SPIE, SPIE, BELLINGHAM, VA, US, vol. 5100, 2003, pages 92-103, XP002300098 ISSN: 0277-786X
- CHUN-TING CHOU ET AL: "Inter-frame space (IFS) based service differentiation for ieee 802.11 wireless LANs" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, vol. 3, 6 October 2003 (2003-10-06), pages 1412-1416, XP010702439 ISBN: 0-7803-7954-3

## Description

The present invention relates generally to wireless communication systems and, more particularly, to systems and methods for reducing transmit latency reduction in wireless communications.

Technologies associated with the communication of information have evolved rapidly over the last several decades. For example, over the last two decades wireless communication technologies have transitioned from providing products that were originally viewed as novelty items to providing products which are the fundamental means for mobile communications. Perhaps the most influential of these wireless technologies were cellular telephone systems and products. Cellular technologies emerged to provide a mobile extension to existing wireline communication systems, providing users with ubiquitous coverage using traditional circuit-switched radio paths. More recently, however, wireless communication technologies have begun to replace wireline connections in almost every area of communications. Wireless local area networks (WLANs) are rapidly becoming a popular alternative to the conventional wired networks in both homes and offices.

Circa 1990, the IEEE 802 standards committee formed the 802.11 Wireless Local Area Networks Standards Working Group to develop a global standard for radio equipment and networks operating in the 2.4 GHz unlicensed frequency band for data rates of 1 and 2 Mbps. After its introduction, the various versions of the 802.11 standard rapidly formed the basis for standardization of WLAN networks and devices.

One important consideration in wireless communication systems are techniques for avoiding data packet collisions and handling them when they arise. The IEEE 802.11 standard for wireless networks has adopted a data collision avoidance mechanism which involves listening to other mobile devices that are transmitting to the access point and attempting collision avoidance through the use of random back-off timeouts. Collision avoidance is accomplished by requiring each device desiring to transmit to first choose a random value from within a range specified in the IEEE 802.11 standard. Each such device must then wait this random period of time following the previous transmission before commencing. Although this technique does help to avoid collisions, it also negatively effects the latency associated with data packet transmission because it adds additional transmit delay.

Methods for selecting back-off time are described in EP 314 217, EP 125 095 and an article by Cun Ting-Chou at al., titled "Inter-frame space based service differentiation for IEEE 802.11 wireless LANs", published in the 2003 IEEE Vehicular technology conference (Orlando) Volume 4 pages 1412-1416 (EPO reference XP010702437). In these documents it is decribed how measured idle time can be used as a factor for selecting the time interval from which the random back-off time is selected.

Accordingly, it would be desirable to develop wireless communication systems and methods which reduced transmit latency while still providing for collision avoidance.

Systems and methods according to the present invention address this need and others by providing communication systems that that reduce latency associated with packet transmission. Random backoff time can be reduced by monitoring and subtracting medium idle time. Various medium idle time sources can be selectively enabled and considered.

According to one exemplary embodiment of the present invention, a method for transmitting a packet in a wireless communication system includes the steps of: measuring an idle time of a transmission medium, reducing a delay time by the idle time and transmitting said packet at said reduced delay time.

According to another exemplary embodiment of the present invention, a device for transmitting a data packet includes an idle timer for measuring an idle time of a transmission medium, a start controller for reducing a delay time associated with transmission of the data packet by said idle time and a transmitter for transmitting said packet at said reduced delay time.

The accompanying drawings illustrate exemplary embodiments of the present invention, wherein:
FIG. 1 depicts a WLAN system in which the present invention can be implemented;
FIG. 2 depicts an exemplary start controller unit according to an exemplary embodiment of the present invention; and
FIG. 3 is a flowchart illustrating an exemplary method for transmitting data packets according to an exemplary embodiment of the present invention.

The following detailed description of the invention refers to the accompanying drawings. The same reference numbers in different drawings identify the same or similar elements. Also, the following detailed description does not limit the invention. Instead, the scope of the invention is defined by the appended claims.

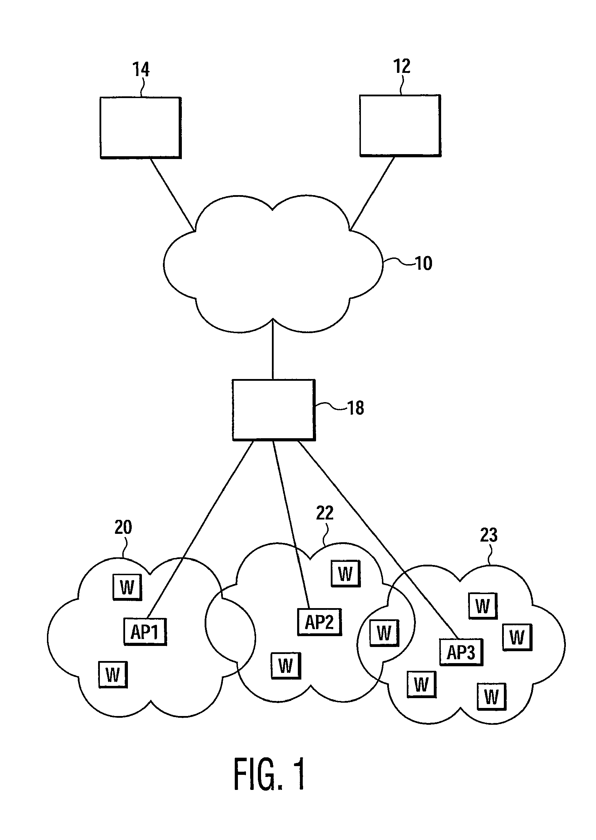

In order to provide some context for this discussion, an exemplary WLAN system will first be described with respect to Figure 1. Those skilled in the art will appreciate, however, that the present invention is not restricted to implementation in WLAN systems. Therein, a wireline network 10 (e.g., an Ethernet network) has a file server 12 and workstation 14 connected thereto. Those skilled in the art will appreciate that typical wireline networks will serve numerous fixed workstations 14, however only one is depicted in Figure 1 for simplicity. The wireline network 10 is also connected to a WLAN 16 via router 18. The router 18 interconnects the access points (AP) of the WLAN 16 with the wireline network, through which the access points can, for example, communicate with the file server 12. In the exemplary WLAN system of Figure 1, three cells 20, 22 and 23 (also sometimes referred to as a Basic Service Set (BSS) or Basic Service Area (BSA) are shown each with a respective AP, although those skilled in the art will once again appreciate that more or fewer cells may be provided in WLAN 16. Within each cell, a respective AP serves a number of wireless stations (W) via a wireless connection.

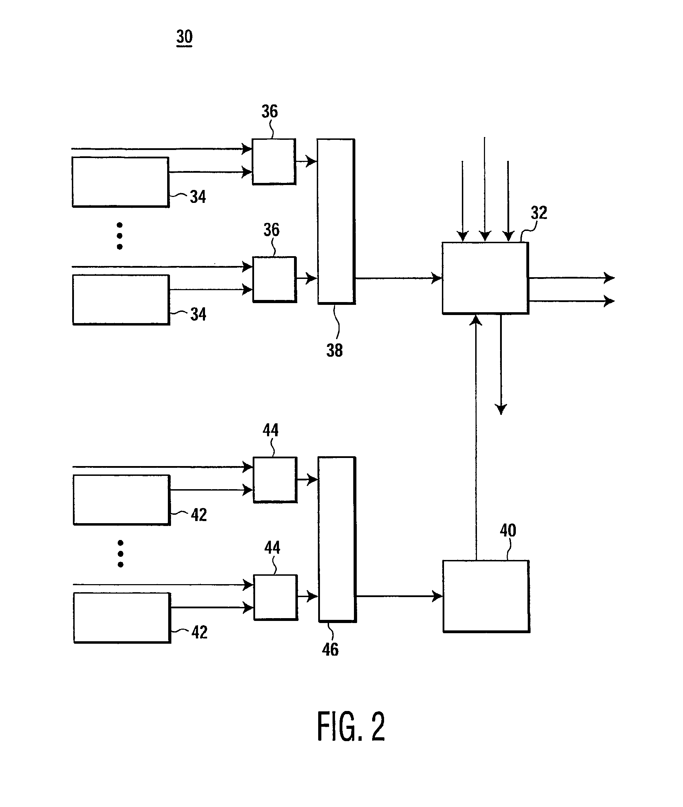

According to exemplary embodiments of the present invention, the transmission of signals between APs and respective wireless stations W is performed using wireless communication signals in accordance with one of the 802.11 standards. However, those skilled in the art will appreciate that the present invention is not so limited and may be implemented for communication of signals in accordance with other formats and standards. An exemplary transmit control unit 30 is shown in Figure 2. Therein, a start controller timer unit 32 generates a start pulse which instructs a transmitter (not shown) associated with a wireless station W to transmit a data packet over the transmission medium. According to these exemplary embodiments, the transmission medium includes wireless transmission channels, e.g., as defined by IEEE 802.11, however those skilled in the art will appreciate that the present invention can be implemented in communication systems and methods wherein different mediums are involved. The start controller timer 32 also sends transmit parameters, e.g., a parameter which informs the transmit control unit 30 where, in memory, the package to be transmitted is located, the data rate, preamble type, etc., to the transmitter with the start pulse. The start controller timer unit 32 has a number of different inputs that are used to determine when the start pulse is sent to the transmitter. These inputs include an initial (A)IFS time, a start trigger, an initial backoff time value, a medium busy signal and a total idle time input. Each of these inputs to start controller unit 32 will now be described.

The initial (A)IFS time is a value which indicates the amount of time the medium needs to be idle, e.g., based on the medium busy signal, before the backoff timer can start running. More specifically, IFS refers to interframe spacing and this value prevents the start controller unit from identifying a space between transmissions as an indication that the medium is idle. The start trigger is an indication that a data packet has been prepared for transmission and that the transmit/backoff timers from this package can be activated. The initial backoff time indicates the amount of time that the medium needs to be idle after the (A)IFS time has expired before a transmission can start.

The medium busy signal is generated when one (or more) of (optionally) a plurality of medium busy source generators 34 indicate that the transmission medium is being used by other wireless stations W. Examples of medium busy source generators 34 include (1) the (inverted) PHY CCA (physical clear channel assessment) signal, which indicates if another transmit control unit 30 is transmitting via the medium, (2) the running of the NAV (network allocation vector) counter, which is an indication about how long a transmitting station has reserved the medium, (3) an indication that another start controller 32 has an active status, (4) an indication that a ATIM (announcement traffic indication message) period is ongoing, (5) a signal that a Bluetooth device is transmitting or has indicated that it will transmit soon, etc.

As will also be seen in Figure 2, each medium busy source 34 also can have a respective source sensitivity enabling signal associated therewith. This permits each medium busy source 34 to be selectively enabled or disabled by ANDing the output of the medium busy source 34 with its respective enable signal via AND gates 36. The outputs of AND gates 36 are then input to OR gate 38 to generate the medium busy signal. This permits the start controller unit 32 to be selectively operated in different modes which consider different sets of activities to make the medium busy relative to this particular wireless station W. For example, consider that the medium busy sources include a first medium busy source 34 which indicates that the medium is busy when the PHY CCA signal is active and a second medium busy source 34 which indicates that the medium is busy when another transmit control unit 30 is active. Under certain situations, it may be desirable to generate a medium busy input to start controller 32 when either the PHY CCA signal is active or the other transmit control unit is active, e.g., when the other transmit controller 30 has a higher transmit priority than this transmit controller 30. Under other circumstances it might be desirable to generate a medium busy input to start controller unit 32 only when the PHY CCA signal is active, but not when the other transmit control unit is active e.g., when the other transmit control unit 30 has a lower transmit priority than this transmit control unit 30. Thus, in the latter case it may be desirable to disable the medium busy source 34 associated with the lower priority transmit control unit 30. This feature of exemplary embodiments of the present invention provides start controller units 32 which programmable flexibility so that they can be used in various applications. For example, different start controller units 32 can have different sets of medium busy sources signals enabled to provide different transmit behaviors, e.g., different priorities between different transmit queues, to permit the transmission of packages only during the ATIM period, to permit the transmission of data packages only during the CFP, etc. The various source sensitivity enable signals shown in Figure 2 can be generated by, for example, software programmable registers (not shown).

The idle timer 40 tracks the amount of time that the medium has been idle after the start controller unit 32 has become inactive and sends a total idle time signal to the start controller timer unit 32 which indicates this total time. Like the medium busy signal generation mechanism described above, the idle timer 40 can have a plurality of medium busy sources 42 which provide inputs thereto. These medium busy sources 42 may be the same as, partially the same as or completely different than the medium busy sources 34. Additionally, each medium busy source 42 can be selectively enabled or disabled by providing an idle timer source sensitivity signal associated with each of the medium busy sources 42. The idle timer source sensitivity signals are then logically ANDed with their respective medium busy source 42 in gates 44, before being input to OR gate 46. Thus, if any one of the enabled medium busy sources 42 indicates that the medium is busy, the OR gate 46 outputs an idle timer medium busy signal to the idle timer 40 to stop the timer. When none of the enabled medium busy sources 42 indicate that the medium is busy, then the value output from OR gate 46 will invert, enabling the idle timer 40. According to another exemplary embodiment of the present invention, when OR gate 46 indicates that the medium is idle, the idle timer 40 is reset back to zero. In this case the idle timer 40 will instead indicate the amount of time which has passed since the idle timer medium busy signal indicated an idle medium.

Like the source sensitivity signals input to AND gates 36, the idle timer source sensitivity signals input to AND gates 44 can be selectively enabled and disabled using, e.g., software programmable registers. This provides flexibility in the operation of the transmit control unit 30. Whereas the enablement mechanisms for the medium busy sources 34 described above can, for example, operate as a function of characteristics (e.g., priority) of other start controller units 32, the idle timer source sensitivity signals may not be based on such characteristics and, therefore, can be separately programmable.

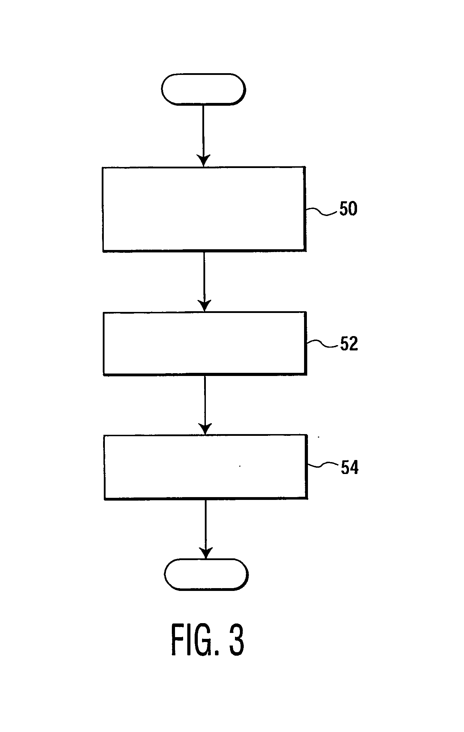

Having described an exemplary transmit control unit 30 according to an exemplary embodiment of the present invention, a method for transmitting data packets according to an exemplary embodiment of the present invention will now be described with respect to the flowchart of Figure 3. Therein, when a start trigger signal is received by start controller unit 32, indicating that a data packet has been generated for transmission, the start controller 32 reads the initial (A)IFS value and the initial backoff time value at step 50. The start controller unit 32 then subtracts the amount of time that the medium has been idle as indicated by the idle timer 40. The idle time value can first be subtracted from the initial (A)IFS value and, if there is remaining idle time, it can be subtracted from the initial backoff value as indicated by step 52. If the result is zero or less, then the transmission of the data packet can begin immediately at step 54. Otherwise, the remaining (A)IFS and backoff time is used as the starting point for the downcounting timer (not shown) provided in start controller unit 34. When the downcounting timer reaches zero, then the data packet is sent at step 54. According to another exemplary embodiment of the present invention, the idle time may only be subtracted from the backoff time rather than the sum of the backoff time and the (A)IFS time. According to a still further exemplary embodiment, a programmable minimum required remaining backoff /IFS time may be provided for after the subtraction, such that an immediate transmission is prevented.

If, during the downcounting of the reduced delay time, the start controller unit 32 receives an indication that the medium becomes busy from OR gate 38, then the downcounting is suspended. Once the medium becomes idle again then, after waiting for a period equal to the initial (A)IFS time, the downcounting is resumed. The downcounter value at this time can, for example, either be the same value which remained in the downcounter when the operation was suspended or it can be that value rounded up to the nearest multiple of a slot time duration associated with the channels defined for transmission via the medium.

The above-described exemplary embodiments are intended to be illustrative in all respects, rather than restrictive, of the present invention. Thus the present invention is capable of many variations in detailed implementation that can be derived from the description contained herein by a person skilled in the art. For example, although hardware devices are described in the exemplary embodiments set forth above, those skilled in the art will appreciate that all, or portions of, the functionality described above can instead be implemented in software. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A method for transmitting a packet in a wireless communication system that provides for collision avoidance by delaying transmission of the packet, the method comprising the steps of:
- receiving a start trigger signal;
- receiving information specifying a delay time;
- waiting for a time derived using said information after the start trigger signal before transmitting (54) said packet
**characterized by**
- measuring (50) an idle time of a transmission medium, comprising idle time that has occurred before said start trigger signal;
- reducing (52) the specified delay time by said idle time; and
- waiting for said reduced delay time after the start trigger signal before transmitting (54) said packet.

2. The method of claim 1, wherein said step of measuring an idle time further comprises the step of:
- providing a plurality of medium busy input signals to a counter; and
- counting a time period during which at least one of a predetermined number of said plurality of medium busy signals indicates that said medium is not busy.

3. The method of claim 2, further comprising the step of:
- selectively enabling each of said medium busy signals to provide said predetermined number of said plurality of medium busy signals.

4. The method of claim 1, wherein said step of subtracting said idle time further comprises the step of:
- generating said delay time as the sum of a back-off time and an initial time.

5. The method of claim 1, further comprising the step of transmitting packet upon expiry of the reduced delay time if said medium is not busy upon expiry of the reduced delay time.

6. The method of claim 5, further comprising the steps of:
- generating a plurality of medium busy status signals; and
- generating a medium busy signal when at least one of a predetermined number of said plurality of medium busy status signals indicates that the resource is busy.

7. The method of claim 6, further comprising the step of:
- providing signals from a plurality of medium busy sources;
- selectively enabling each of said signals from the plurality of medium busy sources to provide said predetermined number of said plurality of medium busy signals.

8. A device for transmitting a data packet, the device being configured to provide for collision avoidance by delaying transmission of the data packet, the device comprising:
- a start controller (32) having inputs for a start trigger signal and information specifying a delay time associated with transmission of said data packet, the start controller being configured to wait for a time derived using said information after the start trigger signal; **characterized by**
- an idle timer (40) adapted to measure an idle time of a transmission medium, comprising idle time that has occurred before said start trigger signal;
- the start controller being configured to reduce the delay time associated with transmission of said packet by said idle time;
- a transmitter for transmitting said packet at said reduced delay time after the start trigger signal.

9. The device of claim 8, further comprising:
- a plurality of medium busy signals (42) inputs to said idle counter (40), wherein said idle counter (40) is adapted to count a time period during which at least one of a predetermined number of said plurality of medium busy signals indicates that said medium is not busy.

10. The device of claim 9, further comprising: means for selectively enabling each of said medium busy signals to provide said predetermined number of said plurality of medium busy signals.

11. The device of claim 8, wherein said start controller is adapted to generate said delay time as a sum of a back off time and an initial time

12. The device of claim 8, wherein said transmitter is adapted to transmit said data packet upon expiry of the reduced delay time if said medium is not busy upon expiry of the reduced delay time.

13. The device of claim 12, further comprising: a plurality of resource busy status signals which are used to generate a resource busy signal when at least one of a predetermined number of said plurality of resource busy status signals indicates that the resource is busy.

14. The device of claim 13, further comprising: means for selectively enabling each of said resource busy status signals to provide said predetermined number of said plurality of resource busy signals.

## Patentansprüche

1. Verfahren zum Senden eines Pakets in einem drahtlosen Kommunikationssystem, das durch Verzögern der Sendung des Pakets Kollisionsvermeidung bereitstellt, wobei das Verfahren die Schritte umfasst:
- Empfangen eines Startauslösersignals,
- Empfangen einer Information, die eine Verzögerungszeit angibt,
- Abwarten eines aus der Information abgeleiteten Zeitraums nach dem Startauslösersignal vor dem Senden (54) des Pakets,
**gekennzeichnet durch**
- Messen (50) einer Leerlaufzeit eines Sendemediums, die Leerlaufzeit umfasst, die vor dem Startauslösersignal aufgetreten ist,
- Verkürzen (52) der angegebenen Verzögerungszeit um die Leerlaufzeitund
- Abwarten der verkürzten Verzögerungszeit nach dem Startauslösersignal vor dem Senden (54) des Pakets.

2. Verfahren nach Anspruch 1, wobei der Schritt des Messens einer Leerlaufzeit ferner den Schritt umfasst:
- Bereitstellen einer Mehrzahl von Medienbelegungseingabesignalen an einen Zähler und
- Zählen eines Zeitraums, während dessen zumindest eines von einer vorab festgelegten Anzahl der Mehrzahl von Medienbelegungssignalen anzeigt, dass das Medium nicht belegt ist.

3. Verfahren nach Anspruch 2, ferner umfassend den Schritt:
- selektives Aktivieren jedes der Medienbelegungssignale, um die vorab festgelegte Anzahl der Mehrzahl von Medienbelegungssignalen bereitzustellen.

4. Verfahren nach Anspruch 1, wobei der Schritt des Abziehens der Leerlaufzeit ferner den Schritt umfasst:
- Erzeugen der Verzögerungszeit als die Summe einer Backoff-Zeit und einer Anfangszeit.

5. Verfahren nach Anspruch 1, ferner umfassend den Schritt des Sendens eines Pakets bei Ablauf der verkürzten Verzögerungszeit, wenn das Medium bei Ablauf der verkürzten Verzögerungszeit nicht belegt ist.

6. Verfahren nach Anspruch 5, ferner umfassend den Schritt:
- Erzeugen einer Mehrzahl von Medienbelegungsstatussignalen und
- Erzeugen eines Medienbelegungssignals, wenn zumindest eines von einer vorab festgelegten Anzahl der Mehrzahl von Medienbelegungsstatussignalen anzeigt, dass die Ressource belegt ist.

7. Verfahren nach Anspruch 7, ferner umfassend den Schritt:
- Bereitstellen von Signalen von einer Mehrzahl von Medienbelegungsquellen,
- selektives Aktivieren jedes der Signale der Mehrzahl von Medienbelegungsquellen, um die vorab festgelegte Anzahl der Mehrzahl von Medienbelegungssignalen bereitzustellen.

8. Vorrichtung zum Senden eines Datenpakets, wobei die Vorrichtung konfiguriert ist, um durch Verzögern der Sendung des Datenpakets Kollisionsvermeidung bereitzustellen, wobei die Vorrichtung umfasst:
- einen Startregler (32) mit Eingängen für ein Startauslösersignal und eine Information, die eine mit dem Senden des Datenpakets verbundene Verzögerungszeit angibt, wobei der Startregler konfiguriert ist, nach dem Startauslösersignal einen unter Verwendung der Information abgeleiteten Zeitraum abzuwarten, **gekennzeichnet durch**
- einen Leerlaufzeitgeber (40), geeignet, um eine Leerlaufzeit eines Sendemediums zu messen, die Leerlaufzeit umfasst, die vor dem Startauslösersignal aufgetreten ist,
- den Startregler, der konfiguriert ist, um die mit dem Senden des Pakets verbundene Verzögerungszeit um die Leerlaufzeit zu verkürzen,
- einen Sender zum Senden des Pakets zu der verkürzten Verzögerungszeit nach dem Startauslösersignal.

9. Vorrichtung nach Anspruch 8, ferner umfassend:
- eine Mehrzahl von Eingaben von Medienbelegungssignalen (42) an den Leerlaufzähler (40), wobei der Leerlaufzähler (40) geeignet ist, einen Zeitraum zu zählen, während dem zumindest eines von einer vorab festgelegten Anzahl der Mehrzahl von Medienbelegungssignalen anzeigt, dass das Medium nicht belegt ist.

10. Vorrichtung nach Anspruch 9, ferner umfassend Mittel zum selektiven Aktivieren jedes der Medienbelegungssignale, um die vorab festgelegte Anzahl der Mehrzahl von Medienbelegungssignalen bereitzustellen.

11. Vorrichtung nach Anspruch 8, wobei der Startregler geeignet ist, die Verzögerungszeit als eine Summe einer Backoff-Zeit und einer Anfangszeit zu erzeugen.

12. Vorrichtung nach Anspruch 8, wobei der Sender geeignet ist, das Datenpaket bei Ablauf der verkürzten Verzögerungszeit zu senden, wenn das Medium bei Ablauf der verkürzten Verzögerungszeit nicht belegt ist.

13. Vorrichtung nach Anspruch 12, ferner umfassend: eine Mehrzahl von Ressourcenbelegungsstatussignalen, die verwendet werden, um ein Ressourcenbelegungssignal zu erzeugen, wenn zumindest eines aus einer vorab festgelegten Anzahl der Mehrzahl von Ressourcenbelegungsstatussignalen anzeigt, dass die Ressource belegt ist.

14. Vorrichtung nach Anspruch 13, ferner umfassend: Mittel zum selektiven Aktivieren jedes Ressourcenbelegungsstatussignals, um die vorab festgelegte Anzahl aus der Mehrzahl von Ressourcenbelegungssignalen bereitzustellen.

## Revendications

1. Procédé de transmission d'un paquet dans un système de communication sans fil qui permet d'éviter les collisions en retardant la transmission du paquet, le procédé comprenant les étapes suivantes :
- réception d'un signal de déclenchement de début ;
- réception d'informations spécifiant un temps de retard ;
- attente pendant un temps déduit à partir desdites informations après le signal de déclenchement de début avant la transmission (54) dudit paquet
**Caractérisé par**
- la mesure (50) d'un temps de repos du media de transmission, comprenant le temps de repos qui s'est produit avant le signal de déclenchement de début ;
- la réduction (52) dudit temps de retard spécifié par ledit temps de repos ; et
- l'attente dudit temps de retard réduit après le signal de déclenchement de début avant la transmission (54) dudit paquet.

2. Procédé selon la revendication 1, dans lequel ladite étape de mesure d'un temps de repos comporte en outre l'étape consistant à :
- fournir une pluralité de signaux d'entrée d'occupation de média à un compteur ; et à
- compter une période de temps au cours de laquelle au moins un parmi un nombre prédéterminé de ladite pluralité de signaux d'occupation de média indique que ledit média n'est pas occupé.

3. Procédé selon la revendication 2, comprenant en outre l'étape consistant à:
- activer sélectivement chacun desdits signaux d'occupation de média pour fournir ledit nombre prédéterminé de ladite pluralité de signaux d'occupation de média.

4. Procédé selon la revendication 1, dans lequel ladite étape de soustraction dudit temps de repos comprend en outre l'étape consistant à :
- générer ledit temps de retard comme la somme d'une durée de back-off et d'une durée initiale.

5. Procédé selon la revendication 1, comprenant en outre l'étape de transmission d'un paquet à l'expiration du temps de retard réduit si ledit média n'est pas occupé à l'expiration du temps de retard réduit.

6. Procédé selon la revendication 5, comprenant en outre les étapes consistant à :
- générer une pluralité de signaux d'état d'occupation de média ; et à
- générer un signal d'occupation de média lorsqu'au moins un parmi un nombre prédéterminé de ladite pluralité de signaux d'état d'occupation de média indique que la ressource est occupée.

7. Procédé selon la revendication 6, comprenant en outre l'étape consistant à :
- fournir des signaux provenant d'une pluralité de sources d'occupation de média ;
- activer sélectivement chacun desdits signaux à partir de la pluralité de sources d'occupation de média pour fournir ledit nombre prédéterminé de ladite pluralité de signaux d'occupation de média.

8. Dispositif pour la transmission d'un paquet de données, le dispositif étant configuré pour permettre d'éviter les collisions en retardant la transmission du paquet de données, le dispositif comprenant :
- un contrôleur de début (32) ayant des entrées provenant d'un signal de déclenchement de début et d'informations spécifiant un temps de retard associé à la transmission dudit paquet de données, le contrôleur de début étant configuré pour attendre pendant un temps déduit à partir desdites informations après le signal de déclenchement de début ; **caractérisé par**
- un temporisateur de repos (40) étant agencé de manière à mesurer un temps de repos d'un media de transmission, comprenant le temps de repos qui s'est produit avant le signal de déclenchement de début ;
- le contrôleur de début étant configuré pour réduire le temps de retard associé à la transmission dudit paquet par ledit temps de repos ;
- un émetteur pour transmettre ledit paquet audit temps de retard réduit après le signal de déclenchement de début.

9. Dispositif selon la revendication 8, comprenant en outre :
- une pluralité d'entrées de signaux d'occupation du média (42) vers ledit compteur de repos (40), dans lequel ledit compteur de repos (40) est prévu pour compter une période de temps au cours de laquelle au moins un parmi un nombre prédéterminé de ladite pluralité de signaux d'occupation de média indique que ledit média n'est pas occupé.

10. Dispositif selon la revendication 9, comprenant en outre : des moyens pour activer sélectivement chacun desdits signaux d'occupation de média pour fournir ledit nombre prédéterminé de ladite pluralité de signaux d'occupation de média.

11. Dispositif selon la revendication 8, dans lequel ledit contrôleur de démarrage est prévu pour générer ledit temps de retard comme la somme d'une durée de back-off et d'une durée initiale.

12. Dispositif selon la revendication 8, dans lequel ledit transmetteur est prévu pour transmettre ledit paquet de données à l'expiration du temps de retard réduit si ledit média n'est pas occupé à l'expiration du temps de retard réduit.

13. Dispositif selon la revendication 12, comprenant en outre : une pluralité de signaux d'état d'occupation de ressource qui servent à générer un signal d'occupation de ressource lorsqu'au moins un parmi un nombre prédéterminé de ladite pluralité de signaux d'état d'occupation de ressource indique que la ressource est occupée.

14. Dispositif selon la revendication 13, comprenant en outre : des moyens pour activer sélectivement chacun desdits signaux d'état d'occupation de ressource pour fournir ledit nombre prédéterminé de ladite pluralité de signaux d'occupation de ressource.
